# EUROPEAN PATENT APPLICATION

(11) **EP 0 120 578 A2**
(43) Date of publication of application: **03.10.1984**
(21) Application number: 84300926.7
(22) Date of filing: 14.02.1984
(51) Int. Cl.: A01N 37/48, A01N 39/04, A01N 39/02

(54) **Herbicidal compositions and their use to control undesirable weeds**

(30) Priority: 15.02.1983 GB 8304102
(71) Applicant: ROHM AND HAAS FRANCE, S.A., F-75579 Paris, Cedex 12 (FR)
(72) Inventor: Perrot, André, F-75016 Paris (FR); Riche, Pierre, F-92505 Rueil-Malmaison (FR)
(74) Representative: Angell, David Whilton

(57) **Abstract**

Herbicidal compositions containing the DPE 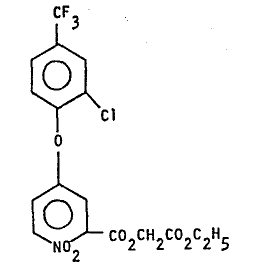 together with one or more of dicamba, mecoprop and ioxynil show a surprising herbicidal effect, especially on weeds commonly found amongst cereal crops.

The ioxynil can be partly or completely replaced by bromoxynil and the mecocrop can be partly or completely replaced by dichloroprop and/or MCPA. Useful commercial ratios of DPE: ioxynil (and/or bromoxynil) are 20 to 30:200 to 400, of DPE: mecoprop (and/or dichloroprop and/or MCPA) are 20 to 60:800 to 1600 and of DPE: dicamba are 30 to 60:45to 75. Methods of controlling the growth of weeds wherein the compositions are applied to growing weeds or to a growth medium prior to weed emergence are also disclosed.

## Description

This invention is concerned with herbicidal compositions and their use to control undesirable weeds. The compositions of the invention comprise mixtures of known herbicides which mixtures surprisingly demonstrate synergistic herbicidal effect over the individual herbicides on certain weeds commonly found amongst cereal crops.

The compound CF 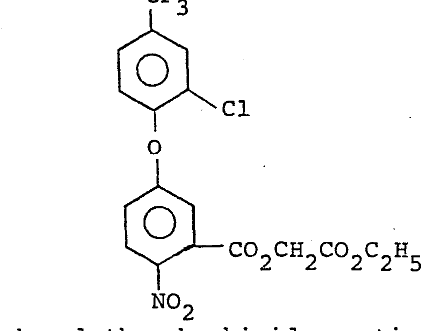 is a diphenylether herbicide mentioned among many others in European Patent Application No. 0020052 which also describes its preparation and herbicidal efficacy, formulations containing it and procedures for applying it as a herbicide.

_{W}e have now surprisingly found that this particular diphenylether, which for convenience we will refer hereinafter as DPE, demonstrates a synergistic herbicidal effect when used in herbicidal compositions in conjunction with a limited number of other herbicides which, in contrast to DPE are of known commercial activity. The preferred among these other herbicides are (a) dicamba which has the chemical names 3,6-dichloro-O-anisic acid (by IUPAC) and 3,6-dichloro-2-methoxybenzoic acid (by CA usage) and (b) mecoprop which is 2-(4-chloro-O-tolyloxy) propionic acid (by IUPAC). The terms "dicamba" and "mecoprop" as used herein also includes salts and esters of the parent acids, such as the potassium and amine salts of dicamba and the potassium and amine salts of mecoprop and esters of mecoprop.

Another, but less preferred, other herbicide is ioxynil which is 4-hydroxy-3,5-di-iodobenzonitrate (by IUPA). The term "ioxynil" as used herein also includes salts of the parent phenolic compound e.g. the alkali metal salts and amine salts and ester octanoate.

Also useful are compositions in which the herbicides other than DPE are wholly, or preferably partially, replaced by other herbicides of the same family and/or with which they are known to be efficacious when used in combination on weeds in cereal crops. For example mecoprop is a member of the aryloxypropionic acid family of herbicides which also includes dichloroprop and similar herbicides such as 2-4 MCPA. Further ioxynil is a representative of benzonitrile herbicides including bromoxynil with which ioxynil is often combined in use. Dicamba is often used in combination with 2,4-D and 2,4-MCPA. Further the herbicides dicamba, mecoprop and ioxynil are known useful as mixtures of two or more of them sometimes with one or more of the_{'} other herbicides just mentioned, e.g. a mixture of mecoprop, dicamba and bromoxynil. Such mixtures are also encompassed within this invention when they further include DPE.

The mixtures of the invention contain the herbicides in the following exemplary active ingredient ratios by weight.

### DPE: ioxynil

10 to 120: 200 to 400, preferably 10 to 60: 200 to 300 more preferably 20 to 60: 200 to 300, most preferably ₂0 to 30: 200 to 300. A useful commercial ratio would be 20 to 30: 200 to 400.

### DPE: mecoprop

10 to 120: 500 to 2000, preferably 10 to 60: 500 to 2000 more preferably 20 to 60: 500 to 1000. A useful commercial ratio would be 20 to 60: 800 to 1600.

### DPE: dicamba

10 to 120: 30 to 120, preferably 10 to 60: 30 to 120, more preferably 30 to 60: 30 to 120. A useful commercial ratio would be 30 to 60: 45 to 75.

Advantage may be taken of the noted synergism in two ways. The mixtures may be used in the above weight ratios but in total doses (grams active ingredient per hectare) less that those hitherto used to give control to weeds at reduced cost.

Alternatively use of the active ingredients at doses (grams/hectare) according to the ratios of active ingredients given above will give enhanced weed control.

The compositions of the invention are useful as post-emergence herbicides on cereal crops, although in the cases of maize and sorghum directed spray application to minimise contact with the crop itself is recommended. They may also be used to control weeds in crop-free ground prior to sowing which may take place two to four months later. This is especially useful when the crop to be sowed requires an undisturbed root system for best yield. One example is sunflower.

In its broadest aspect therefore the invention comprises herbicidal compositions comprising DPE together with one or more of dicamba, mecoprop and ioxynil with the proviso that instead of ioxynil bromoxynil may be used and instead of mecoprop dichloroprop and/or MCPA may be used. The compositions may also include other herbicides such as are known to be useful with one or more of dicamba, mecoprop, ioxynil, bromoxynil, dichloroprop and/or MCPA. Dichloroprop is 2-(2,4-dichlorophenoxy) propionic acid and is frequently used as an alkali metal, particularly potassium, or amine salt.

MCPA is (4-chloro-O-tolyloxy)acetic acid and is frequently used as a salt particularly the sodium salt, or as an ester. Bromoxynil is 3,5-dibromo-4-hydroxybenzonitrile and is frequently used as an alkali metal salt or as octanoate ester. 2,4-D is (2,4-dichloro-phenoxy) acetic acid and is often used as the amine salt.

In all of these cases use of the common name herein is intended to include the useful salts and/or esters. The compositions will usually be used in conjunction with an agronomically acceptable carrier or diluent (and optionally a surfactant) so as to provide a herbicidal composition which, in general, will contain from 0.1 to 99.9% more usually 1 to 99% and even more usually 5 to 95% by weight of active herbicidal components. These herbicidal compositions may be in the form of ready-for-use dusts, aqueous emulsions, suspensions, granules or pellets; alternatively they may be in the form of concentrated solutions, wettable powders, water-dispersible granules, flowable liquid suspensions, pastes or dust concentrates each for dilution with, as the case may be, water or finely divided solids to give diluted aqueous solutions, suspensions, emulsions, or dusts which are then directly usable as herbicidal compositions. It is important that the amount of organic solvent in ready to use liquid formulations be kept very low for application on cereal crops and emulsifiable concentrates and flowable emulsion concentrates are of interest only in this context for dilution with water.

By the term "agronomically acceptable carrier or diluent" as used above is meant a substance which can be utilized to dissolve, disperse, diffuse or otherwise dilute the active ingredient without impairing the effectiveness of the active ingredient and which does no permanent damage to such loci as soil, equipment and agronomic crops. It is usually desirable in post-emergence application to include adjuvants, such as wetting agents, spreading agents, dispersing agents, stickers, adhesives, and the like, in accordance with known agricultural practices. Examples of adjuvants which are commonly used in the art can be found in the John W. McCutcheon, Inc. publication "Detergents and Emulsifiers 1969 Annual".

Wettable powders or dispersible granules or flowable formulation suitable for spraying, can be prepared by admixing the compound with a finely divided solid, such as clays, inorganic silicates and carbonates, and silicas and then incorporating wetting agents, sticking agents, and/or dispersing agents. The concentration of active ingredients in such formulations is typically in the range of from about 20% to about 98% by weight, and, preferably, from about 40% to about 75% by weight. A dispersing agent can constitute about 0.5% to about 3% by weight of the composition, and a wetting agent can constitute from about 0.1% to about 5% by weight of the composition.

Dusts can be prepared by mixing the herbicides with finely divided inert solids which may be organic or inorganic in nature. Materials useful for this purpose include, for example, botanical flours, silicas, silicates, carbonates and clays. One convenient method of preparing a dust is to dilute a wettable powder with a finely divided carrier. Dust concentrates containing from about 20% to about 80% by weight of the active ingredient are commonly made and are subsequently diluted to about 1% to about 10% by weight use concentration.

The herbicides can also be mixed with fertilizers or fertilizing materials before their application. In one type of solid fertilizing composition in which the diphenyl ethers can be used, particles of a fertilizer or fertilizing ingredients, such as ammonium sulfate, ammonium nitrate, or ammonium phosphate, can be coated with one or more of the ethers. The solid herbicides diphenyl and solid fertilizing material can also be admixed in mixing or blending equipment, or they can be incorporated with fertilizers in granular formulations. Any relative propertion of herbicide and fertilizer can be used which is suitable for the crops and weeds to be created. The herbicide will commonly be present in an amount from about 5% to about 25% by weight of the fertilizing composition. These compositions provide fertilizing materials which promote the rapid growth of desired plants, and at the same time control the growth of undesired plants. The herbicides can be applied as herbicidal sprays by methods commonly employed, such as conventional high-gallonage hydraulic sprays, low-gallonage sprays, airblast spray, aerial sprays and dusts. For low volume applications a solution of the compound is usually used. The dilution and rate of application will usually depend upon such factors as the type of equipment employed, the method of application, the area to be treated and the type and stage of development of the weeds.

The application of the herbicidal compositions to cereals, especially, wheat, barley and rye can be by conventional methods. In the case of maize and sorghum directed spray application is recommended. The mixtures of the invention can be formed in situ by sequential application of the active herbicidal components.

Weeds most commonly found in such cereal crops include weeds of the Botanical species Polygonium, Matricaria and Stellaria and the following Examples demonstrate synergism in respect of these weeds. In none of the exemplified field tests was undue phytotoxicity of the crop (winter wheat) evident.

### Examples

### Formulations

### A. Solid Ready-For-Use Preparations

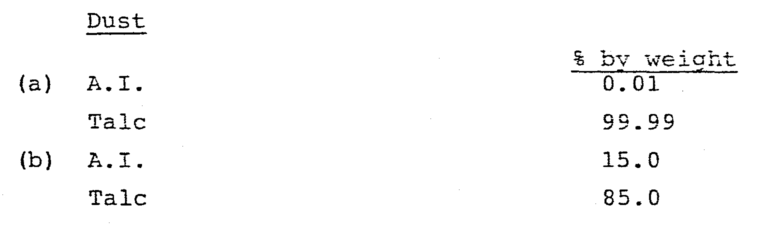

### B. Liquid Ready-For-Use Preparations

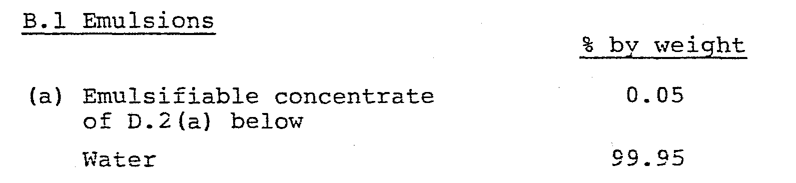

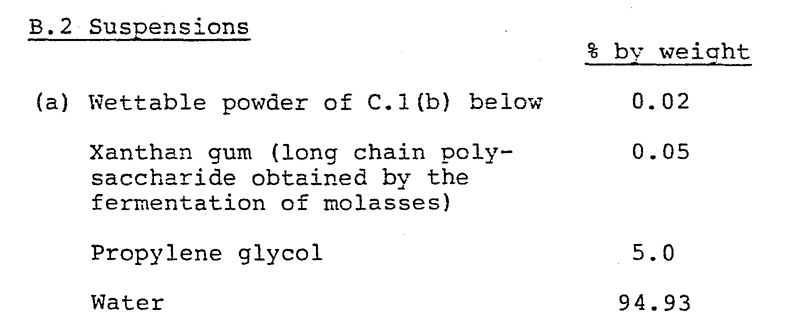

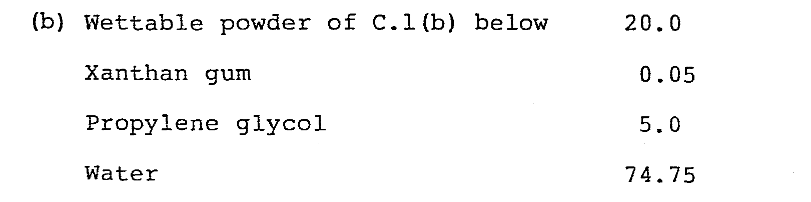

### C. Solid Concentrates

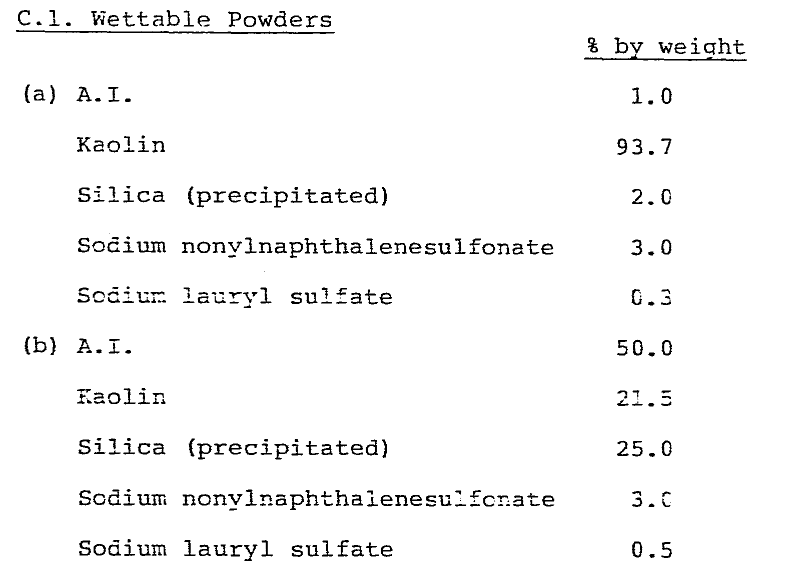

### C.2 Dust Concentrates

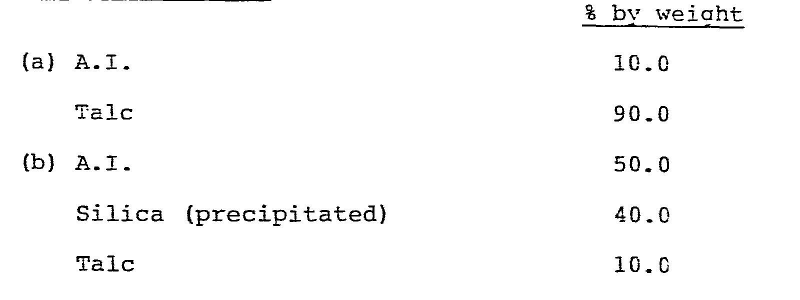

### D. Liquid Water-Soluble or Dispersible Concentrates

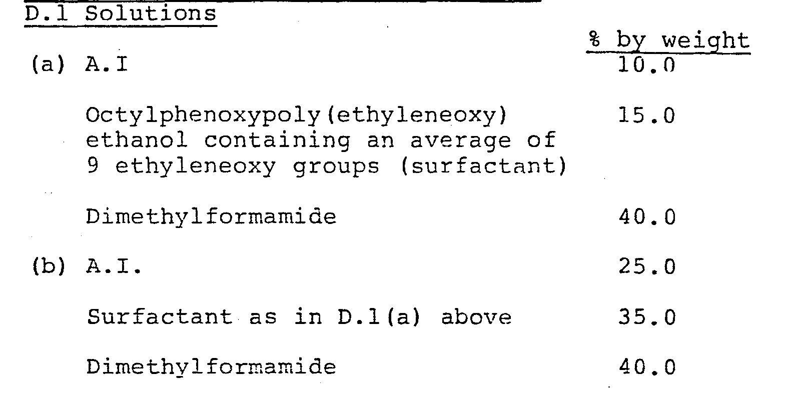

### D.2 Emulsifiable Concentrates for aqueous dilution

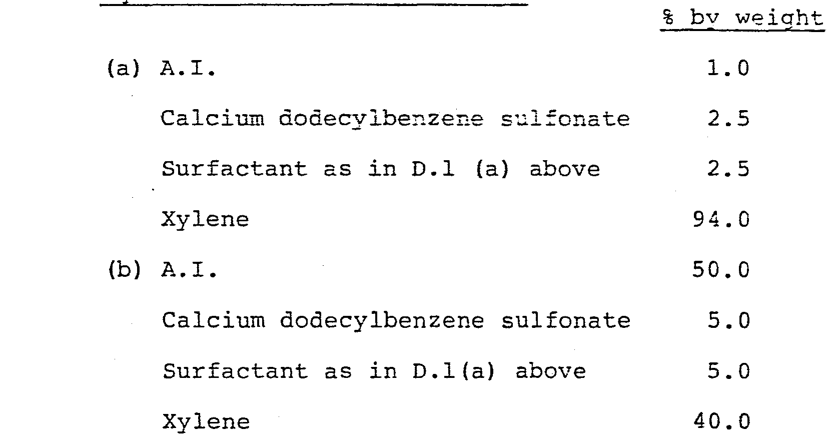

### D.3 Flowable Emulsion Concentrate for aqueous dilution

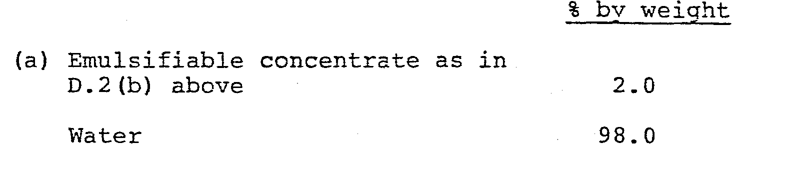

### D.4 Flowable Liquid Suspensions (especially preferred)

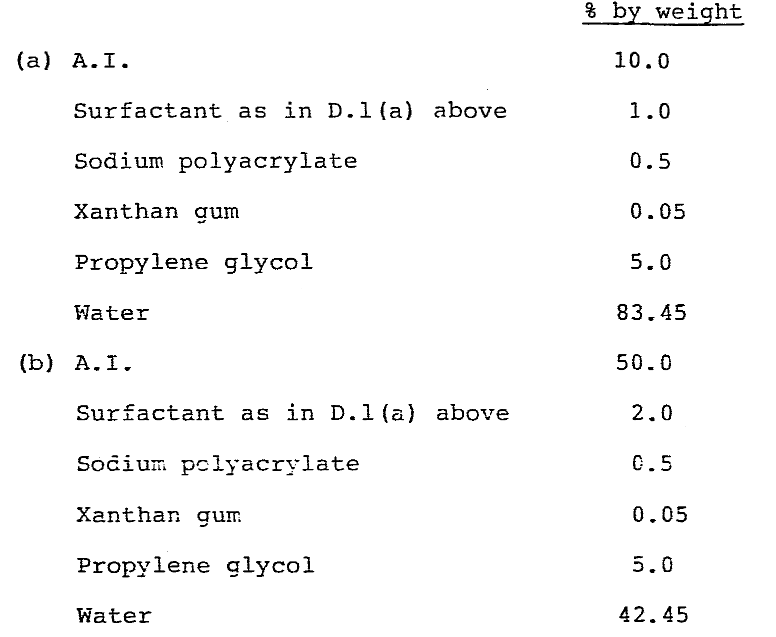

### D.5 Pastes

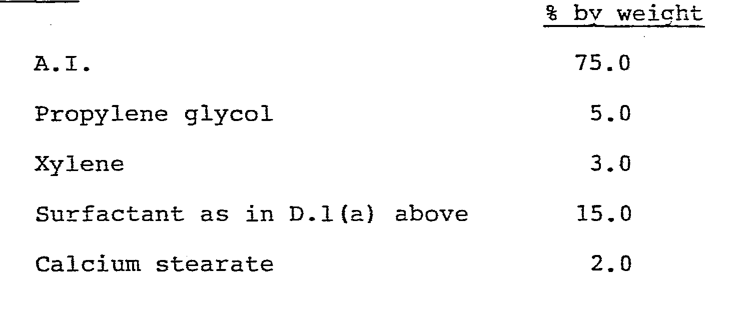

In these biological tests two series of tests were carried out, one in a glasshouse on weeds growing in pots and the other in the open field by the application of the herbicides post-emergence on winter wheat and weeds.

### Pot Trials

The weeds Polygonum lapathifolium and Matricaria chamomilla as indicated in Tables I and II hereinafter were sown in pots containing garden soil which had not previously been treated with a herbicide. After the sowing the soils were maintained moist by regular watering at a temperature of from 8 to 12°C. The herbicides were sprayed in a carrier liquid when the weeds had attained the two to four leaf stage. The liquid volume used was 300 litres per hectare and the doses of each active ingredient in grams per hectare were as indicated in the following Tables. The composition sprayed was formulated from a wettable powder containing 5% by weight of the DPE and wettable powders of mecoprop as the butylglycol ester) and of ioxynil (as the octanoate) each containing 25% by weight of the active ingredient. The dicamba was incorporated from a 500 grams per litre aqueous solution of its amine salt.

The spray composition was made by the usual "tank mix" procedures that is to say that the wettable powders were mixed into a thick paste with water and/or the dicamba solution when appropriate, and this paste was then extended with more water to form a sprayable dispersion.

To demonstrate synergism each pot was sown with three species of weeds. Three pots were left untreated with herbicide, three pots were treated with a mixture of the two herbicides as indicated and each of three pots were treated only with the individual herbicides. The pots were observed for four weeks after the treatment and the weed populations counted two weeks after the treatment.

The results and further details of the tests are given in Tables 1 and 2 hereinafter.

### Field Trials

Field trials were carried out in up to three different locations on plots two metres by ten metres in area sown with winter wheat and beaning weeds as indicated in Tables III to V hereinafter, with adjacent control plots and with two repetitions. The herbicides were applied by liquid suspension, made as in the pot trials, at a rate of 600 litres per hectare.

Application of the herbicides was carried out at mid- tillering (stage 3 to 4 on the Large scale, Plant Pathology 1954 Volume 3 pages 128 to 129).

As in the pot trials, the plots were observed over a period of four weeks and the weed counts taken two weeks after treatment.

The results and further details of the treatment are given in tables III to V hereinafter.

### Synergism

The results are expressed as a percentage of weeds destroyed in two ways: the actual observed percentage (%R) and the calculated percentage (%C) on the basis of the herbicidal activity measured when each of the two herbicides was used individually on the basis of the Linpel formula:
C = X + Y - XY in which X equals % weed destroyed by 100 the first herbicide alone;
Y = % weeds destroyed by the second herbicide alone;
C = % weeds expected to be destroyed by the combination of the two herbicides assuming no synergism.

When the difference between %R and %C is positive synergism is demonstrated. If it is negative antagonism is demonstrated. Support for this basis of measurement of synergism is to be found in the articles by Limpel, Schulot and Lamont, 1962, Proc. NEW cc, Volume 16: pages 48 to 53 and Colby, Weeds, January 1967 pages 20 to 22.

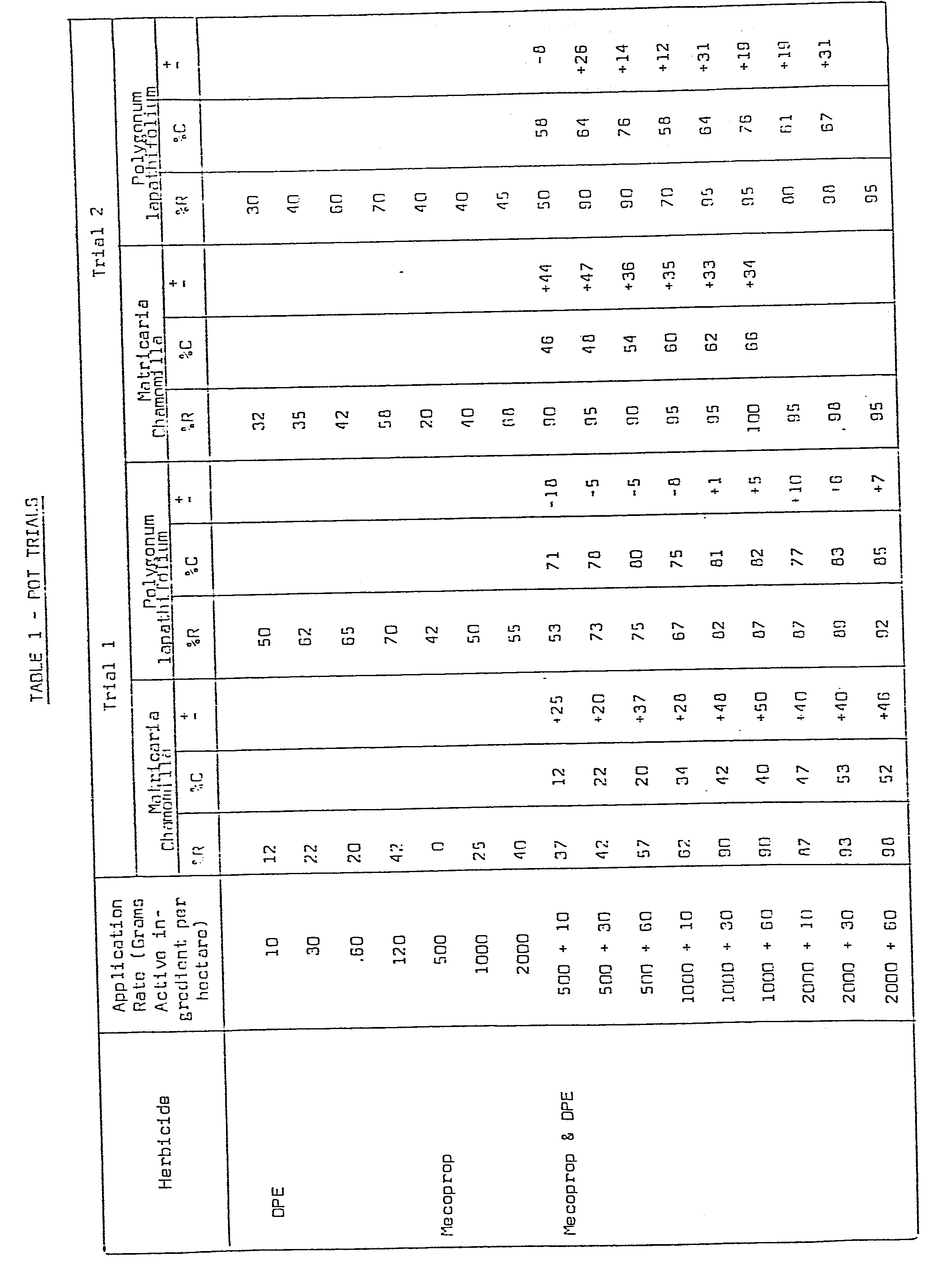

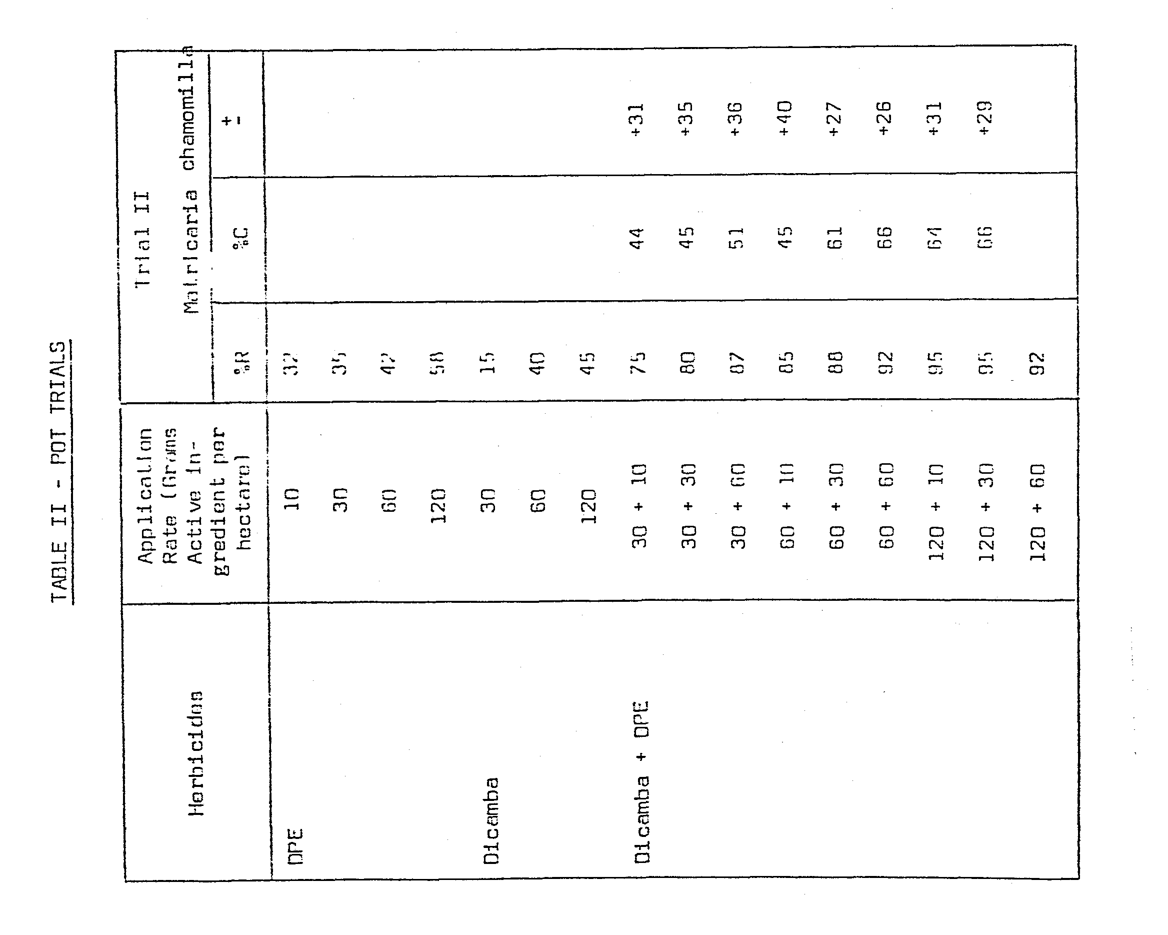

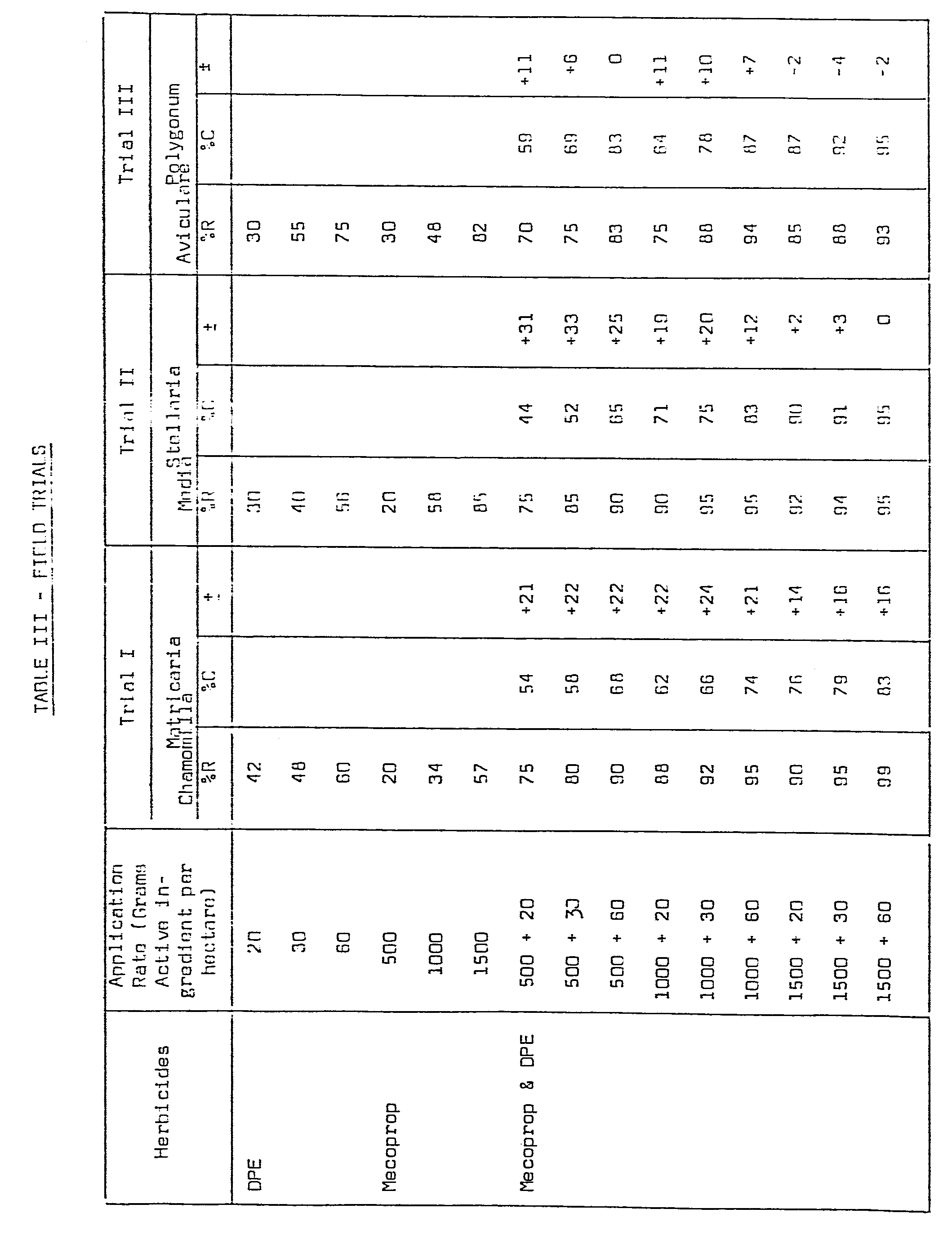

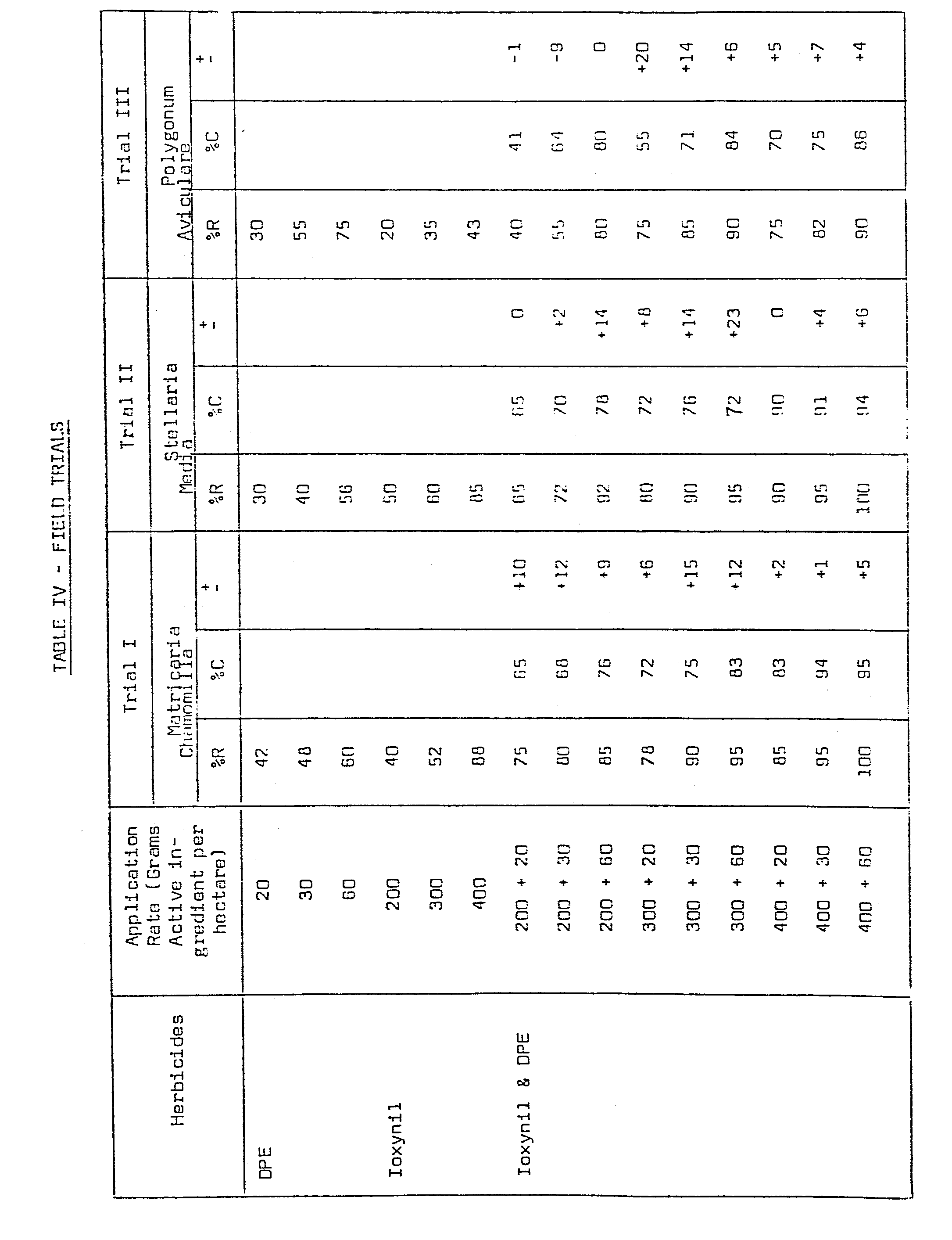

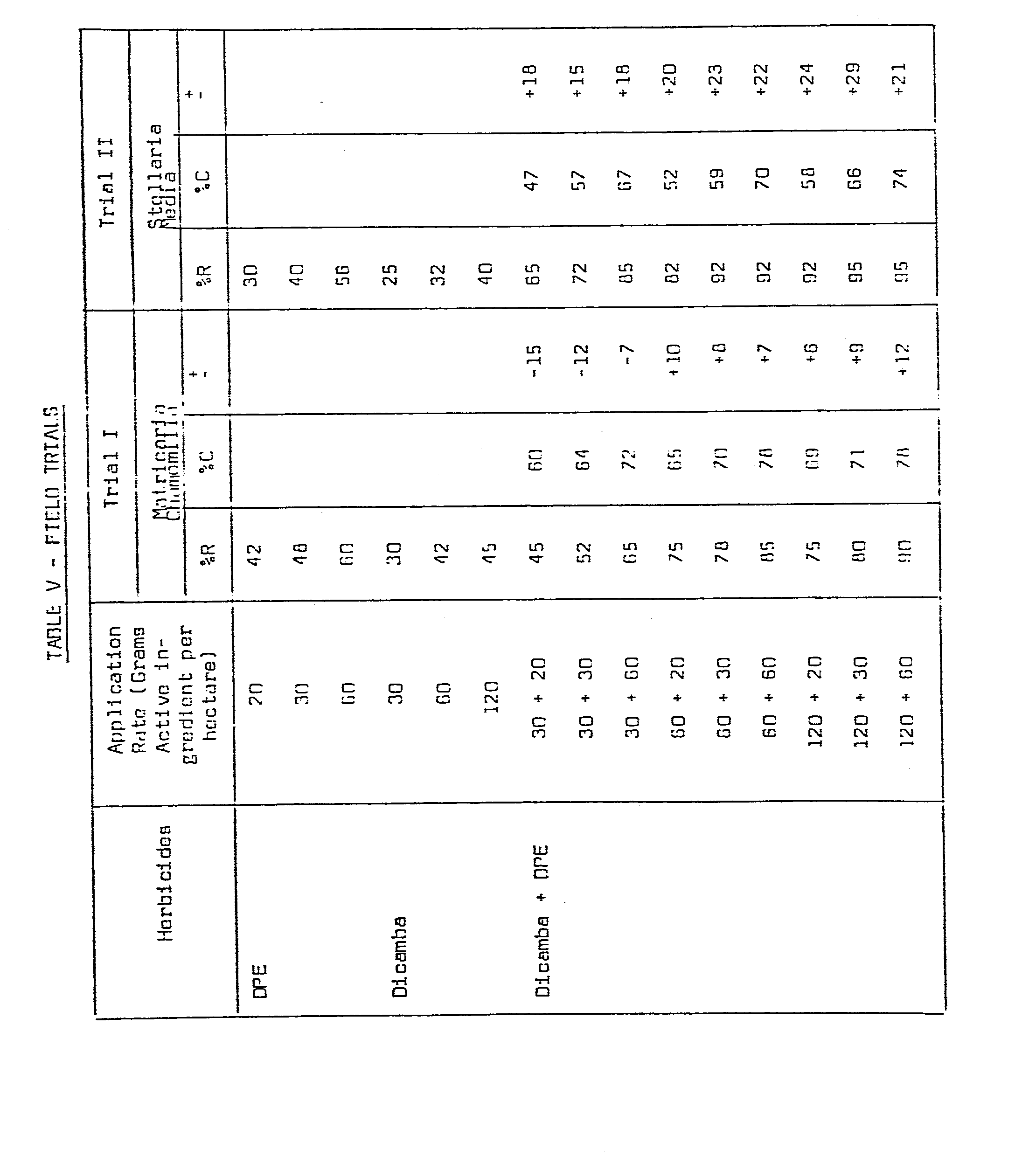

These results clearly demonstrate synergism in respect of binary mixtures of DPE and ioxynil on Matricaria chamomilla, Stellaria media and Polygonum aviculare and, to a greater extent of DPE and dicamba on Matricaria chamomilla and Stellaria media and between DPE and mecoprop on Matricaria chamomilla, Polygonum lapathifolium, Polygonum aviculare and Stellaria media. The level of synergism indicated also justifies the preferred ratios and dosages of the herbicides given hereinbefore.

## Claims

1. A herbicidal composition comnrisina the DPE compound 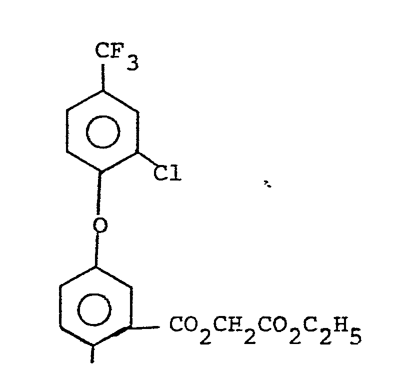 together with one or more of dicamba, mecoprop and ioxynil with the proviso that some or all of the ioxynil may be replaced by bromoxynil and/or some or all of the mecoprop may be replaced by dichloroprop and/or MCPA, and agronomically acceptable salts and/or esters thereof.

2. A composition according to Claim 1 containing 20 to 98% by weight active herbicidal components, said composition being in the form of a wettable powder, dispersible granules or flowable formulation.

3. A composition according to Claim 1 or 2 containing the DPE and ioxynil (and/or bromoxynil) in the ratio 10 to 120:200 to 400 by weight.

4. A composition according to Claim 3 in which the ratio is 20 to 30:200 to 400.

5. A composition according to any preceding claim containing the DPE and mecoprop (and/or dichloroprop and/or MCPA) in the ratio 10 to 120:500 to 2000 by weight.

6. A composition according to Claim 5 in which the ratio is 20 to 60:800 to 1600.

7. A composition according to any preceding claim containing the DPE and dicamba in the ratio 10 to 120:30 to 120 by weight.

8. A composition according to Claim 7 in which the ratio is 30 to 60:45 to 75.

9. A method of combating weeds which comprises applying to growing weeds or to the surface of a growth medium prior to emergence of weeds therefrom, a composition as claimed in any preceding claim in an amount sufficient to control the growth of weeds.

10. A method as claimed in Claim 9 which comprises the use of the composition as a post-emergence herbicide on a cereal crop.
